# EUROPEAN PATENT SPECIFICATION

(11) **EP 2 918 368 B1**
(45) Date of publication and mention of the grant of the patent: **19.06.2019**
(21) Application number: 14159139.6
(22) Date of filing: 12.03.2014
(51) Int. Cl.: B23K 20/12

(54) **Friction stir welding system with a movable backing system**
Reibrührschweisssystem mit verfahrbarer Stützeinrichtung
Système de soudage par friction-malaxage avec un support de pièces mobile

(43) Date of publication of application: 16.09.2015
(73) Proprietor: Airbus Operations GmbH, 21129 Hamburg (DE)
(72) Inventor: Penski, Dirk, 22307 Hamburg (DE)
(74) Representative: LKGLOBAL Lorenz & Kopf PartG mbB Patentanwälte

(56) References cited:
- EP-A1- 2 080 579
- WO-A2-2009/033157
- US-B1- 6 237 835

## Description

The invention relates to friction agitation or stir welding system comprising a movable backing system to clamp plate-shaped workpieces for friction agitation or stir welding and a welding tool to weld plate-shaped workpieces, such as known from EP-A-2 080 579.

### BACKGROUND OF THE INVENTION

Friction agitation welding, and in particular friction-stir welding (FSW), is a solid-state joining process that uses a bobbin tool to join two abutting plate-shaped workpieces. Heat is generated between tool and material which leads to a very soft region near the bobbin tool. Then, the two pieces of metal mechanically intermix at the place of join, so that the softened metal can be joined using mechanical pressure applied by the bobbin tool. It is primarily used on aluminum, and on structures which need superior weld strength without a post weld heat treatment. It is applicable in aircraft construction in the process of longitudinally or circumferentially joining large parts as e.g. fuselage shells or fuel tanks.

US 2013/334289 A1 discloses a movable joining device for connecting structural components of an aircraft, with joining means moveably arranged on a guiding device situated on the outside of the structural components so as to fixedly connect joining edges of the structural components positioned adjacent to each other, wherein the joining means includes a welding unit that can move on the rail-like guiding device, and is equipped with a special so-called bobbin tool as a tool for friction stir welding.

US 2014/034711 A1 discloses a friction agitation welding process, wherein a rotating bobbin tool is moved along a weld between two plate-shaped workpieces, exerting a first and a second contact pressing force on first and second sides, respectively, and wherein said bobbin tool is subjected to an additional axial force during its movement along the weld to plastically deform the area of the created welding seam such that the welding seam is pressed towards one side of the plate-shaped workpieces while forming a welding seam elevation protruding opposite from the workpiece surface.

WO 2009/033157 A2 discloses a portable friction stir welding apparatus having a crawler which supports a motor for rotating a Friction Stir Welding tool and is coupled to a drive mechanism for urging the crawler along a predefined weld path on work pieces. The crawler can comprise one member or a set of two or three physically separated members each rotatably coupled to the friction stir welding tool.

### SUMMARY OF THE INVENTION

However, there may be still a need to provide an improved friction agitation welding system comprising a movable backing system to precisely clamp plate-shaped workpieces for friction agitation welding.

The object of the present invention is solved by the subject-matters of the independent claim 1, wherein further embodiments are incorporated in the dependent claims.

According to a first aspect of the present invention, a friction agitation welding system comprises a movable backing system to clamp plate-shaped workpieces for friction agitation welding, in particular friction-stir welding (FSW), and a welding tool to weld plate-shaped backing workpieces. The movable backing system comprises an upper unit to be arranged above the workpieces to support the workpieces, a lower unit to be arranged below the workpieces to support the workpieces, and a connecting means connecting the upper and the lower unit to be arranged in a gap between the workpieces to be welded. The backing system cannot only be used for welding procedures, but for all kind of joining, clamping or aligning procedures.

Thereby, not only very small, but also very precisely defined gaps between the workpieces with tight tolerances can be implemented, which leads to a superior welding quality. The clamping and alignment procedure is made easier and faster. As the clamping and alignment is provided before the welding, detrimental effects due to e.g. shrinking, bulging or lateral opening forces during welding can be prevented, which further improves the welding quality. Further, as a rigid interior backing can be omitted, a one-side weld can be performed, which is beneficial for e.g. aircraft structures with limited interior accessibility. It is even possible to join workpieces of different thicknesses.

According to an exemplary embodiment of the invention, the upper unit comprises at least an upper roller and the lower unit comprises at least a lower roller to define the position of the plate-shaped workpieces to be welded. The rollers can also be balls or even rollers supported by balls to balance lateral forces. The rollers can be arranged on all sides of the connecting means.

There may be two rollers in the upper unit and two rollers in the lower unit. There may be two rollers in the upper unit and four rollers in the lower unit. There may be four rollers in the upper unit and two rollers in the lower unit. There may also be four rollers in the upper unit and four rollers in the lower unit. There can be even more than four rollers. Further, some rollers can also be combined to be formed by a single barrel.

According to an exemplary embodiment of the invention, the connecting means is strip-or fiber-shaped, which means it can have an angular or round cross section. The connecting means may transmit a defined force between the upper and lower rollers to equalize thickness tolerances between sheets to be welded.

The connecting means can be arranged between the rollers, in particular centered between the rollers. The connecting means can be a single strip or fiber. The connecting means can also be two or more strips or fibers. The connecting means can furthermore be arranged outside the rollers, in particular outside the roller arrangement or even partially inside and partially outside the roller arrangement.

According to an exemplary embodiment of the invention, the upper and/or the lower unit comprises coupling means to couple the upper and the lower unit. The coupling means may provide a defined force between the upper and lower rollers to equalize thickness tolerances between sheets to be welded.

The coupling means may be a tension spring, a pressure spring, a hydraulic cylinder, a pneumatic cylinder, a magnetic system and/or the like. The spring may be a disk spring, a circular spring, a spiral spring, a leaf spring or the like.

The coupling means may be arranged in the upper unit, but may also be arranged in the lower unit. In detail, the coupling means may be a tension spring arranged in the upper unit to pull the lower rollers in the direction of the upper rollers or a pressure spring to push the upper rollers in the direction of the lower rollers. The coupling means may also be a pressure spring arranged in the lower unit to push the lower rollers in the direction of the upper rollers or a tension spring to pull the upper rollers in the direction of the lower rollers. The coupling means may also be a housing of the backing system acting as a leaf spring. The coupling means may act with a force of between about 50 N and 50 kN on the respective roller(s), preferably 100 N to 4 kN, and more preferably 300 to 1000 N.

Further, the upper and/or the lower unit may comprise a sensor to monitor the movement of the movable backing system. The backing system may perform an online monitoring of the welding path. Measurement data (e.g. force or length measurements) can be used to adapt the welding path to the welding tool.

The strip may be exchangeable and may have a width or diameter between about 1 and 0,01 mm, preferably between about 0,5 and 0,09 mm, and more preferably between about 0,2 and 0,1 mm. The strip may have a low wear and a high tensile strength between about 500 and 2000 N/ mm², preferably between about 1000 and 1500 N/ mm², and more preferably between about 1200 and 1400 N/ mm². The strip may be made of ceramic, carbon, stainless steel or high alloy steel, in particular of a CrNi alloy or a Ni base alloy. The strip may be of X2CrNiMo17-12-2.

One or some of the components of the friction agitation or stir welding system may also comprise measurement sensors, as e.g. force measurement gauges, to control the path of the movable backing system and/or the welding tool.

In other words, the idea of the invention is to provide a local workpiece alignment and clamping prior to a friction agitation or stir welding with a welding or bobbin tool. Each plate to be welded is supported at the upper and/or the lower side by at least one roller. A connection between the upper and/or the lower side is effected through a gap preceding the welding tool by means of a strip- or fiber-shaped connecting means extending through the gap. A coupling between the upper and/or the lower side is effected by means of e.g. a spring.

### BRIEF DESCRIPTION OF THE DRAWINGS

Exemplary embodiments of the invention will be described in the following with reference to the following drawings.
Fig. 1 schematically shows a lateral view of a movable backing system,
Fig. 2 schematically shows a lateral view of a movable backing system, in more detail,
Fig. 3 schematically shows a 3D view of one embodiment of a movable backing system,
Fig. 4 schematically shows a 3D view of another embodiment of a movable backing system,
Fig. 5 schematically shows a possible position of rollers,
Figs. 6A-D schematically show further possible position of rollers,
Figs. 7A-B schematically show positions of rollers and connecting means,
Figs. 8A-B schematically show further embodiments of a movable backing system in more detail,
Fig. 9A-B schematically show further embodiments of a movable backing system in more detail, and
Fig. 10 schematically shows a further embodiment of a movable backing system in more detail.

### DETAILED DESCRIPTION OF EMBODIMENTS

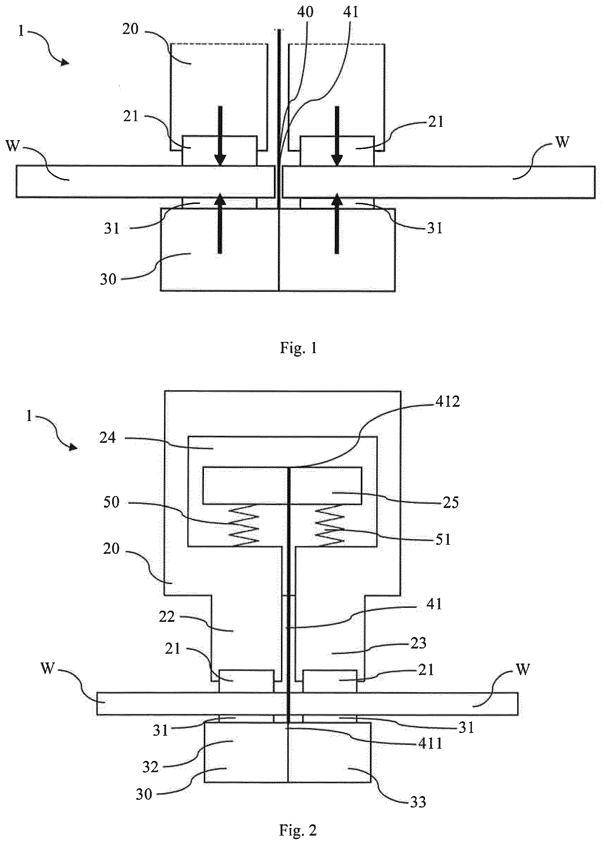

**Fig. 1** schematically shows a lateral view of a movable backing system 1 to clamp and align two plate-shaped workpieces W to be welded together by friction agitation welding, in particular friction stir welding, or to be joined other wisely. The backing system 1 comprises an upper unit 20 arranged above the workpieces W to support the workpieces W, and a lower unit 30 arranged below the workpieces W to support the workpieces W. The backing system 1 further comprises a connecting means 40 connecting the upper unit 20 and the lower unit 30. The connecting means 40 is here a strip 41, but can also be a fiber.

The upper unit 20 comprises two upper rollers 21 and the lower unit comprises two lower rollers 31 clamping and aligning the workpieces W between each other, as shown by the arrows in Fig. 1. The rollers 21, 31 define the position of the plate-shaped workpieces W to be welded. The rollers 21, 31 are arranged on the left and the right side of the strip 40, which means the strip 40 has a roller 21; 31 on each side. As will be shown in the following Figures, also other numbers and arrangements of rollers 21, 31 and strips 40 are possible.

**Fig 2** schematically shows a further lateral view of the movable backing system 1 in more detail. The upper and the lower unit 20, 30 comprises coupling means 50 to couple the upper and the lower unit 20, 30. The coupling means 50 can be a pressure spring, a tension spring, a hydraulic cylinder, a pneumatic cylinder and/or a magnetic system. In Fig. 2, the coupling means 50 is shown as two springs 51, in particular tension springs. The springs 51 are arranged in a recess 24 of the upper unit 20, but can also be arranged elsewhere, e.g. outside the upper unit 20. The springs 51 pull the lower rollers 31 in the direction of the upper rollers 21 and therefore towards the workpieces W to be welded.

A lower end 411 of the strip 41 is gripped between two adjacent parts 32, 33 of the lower unit 30 and is arranged between two adjacent lower rollers 31. An upper end 412 of the strip 41 is arranged between two adjacent upper rollers 21 and two adjacent parts 22, 23 of the upper unit 20 and is gripped in the recess 24 of the upper unit 20. The strip 41 is gripped in detail between two adjacent parts of a bar 25 coupled by the springs 51 with the upper unit 20.

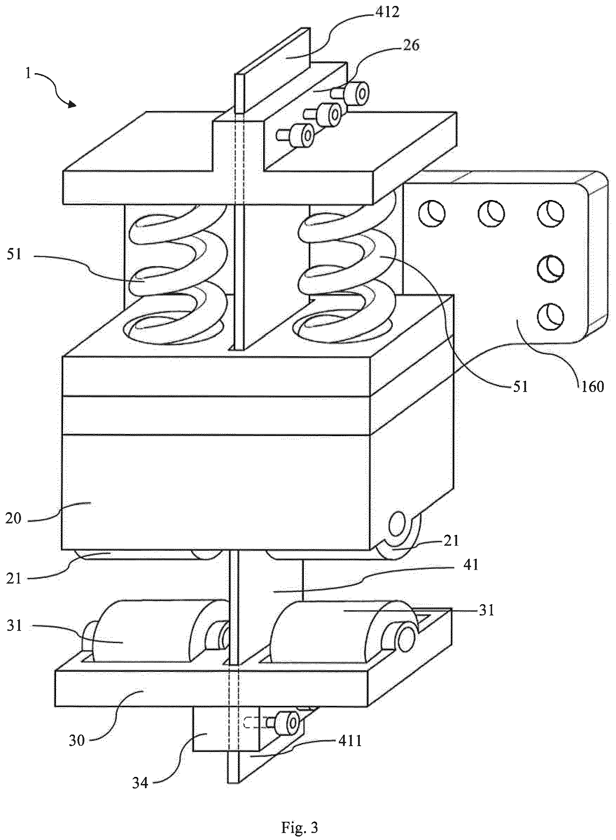

**Fig. 3** schematically shows a 3D view of the movable backing system 1. It comprises the upper unit 20 and the lower unit 30. The upper unit 20 comprises two upper rollers 21 and the lower unit comprises two lower rollers 31. The backing system 1 further comprises the strip 41 connecting the upper unit 20 and the lower unit 30 and two springs 51 to couple the upper and the lower units 20, 30. As can be seen in detail, the upper and lower ends 412 and 411 of the strip 41 are e.g. screwed to projections 26, 34 of the upper and lower units 20, 30 and passes there between. The movable backing system 1 further comprises an interface 160 to be connected to a welding tool (here not shown).

The springs 51 provide a defined force between the upper and lower rollers 21, 31 to equalize thickness tolerances between the workpieces W to be welded. The strip 41 transmits the defined force between the upper and lower rollers 21, 31 to equalize thickness tolerances between the workpieces W.

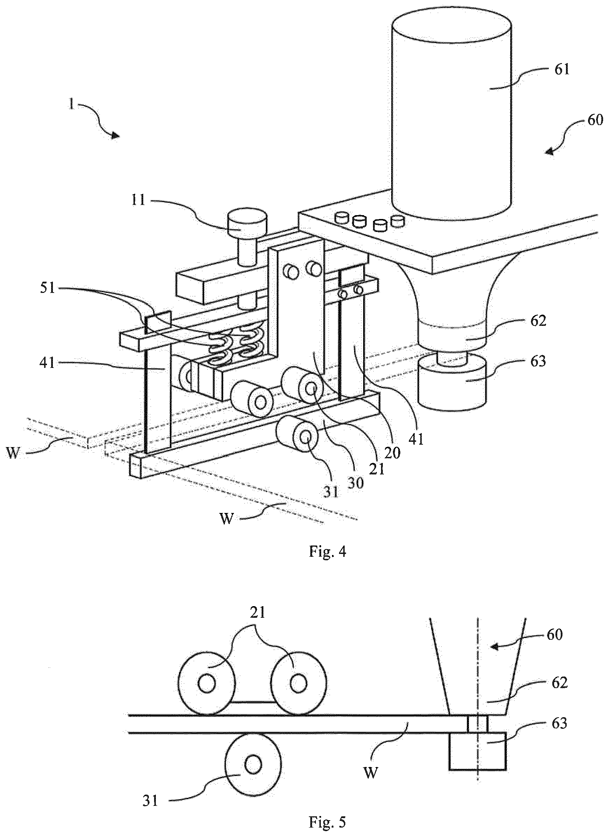

**Fig. 4** schematically shows a further 3D view of the movable backing system 1 with the two workpieces W to be welded arranged between the rollers 21, 31 of the upper and the lower units 20, 30. In contrast to the previous embodiment, here four upper rollers 21 (not all visible) and two lower rollers 31 are provided. Further in contrast to the previous embodiment, here two strips 41 are provided, which are arranged outside the rollers 21, 31, which means on the left and right sides of the rollers 21, 31 and not between and surrounded by the rollers 21, 31 as shown in the previous figures. The strips 41 connect the upper unit 20 and the lower unit 30 and the springs 51 couple the upper and the lower units 20, 30.

The backing system 1 further comprises a pressing means 11, which allows a user to release the preferably pre-tensioned backing system 1, so that a distance between the upper and lower rollers 21, 23 increases, which facilitates the positioning of the movable backing system 1 between the workpieces W to be welded.

Fig. 4 further shows an exemplar junction of the backing system 1 to a welding tool 60. Various other options are possible to connect the backing system 1 to the welding tool 60. Here, the welding tool 60 comprises a spindle or bobbin 61, an upper shoulder 62 and a lower shoulder 63. The two workpieces W will be welded between the upper and the lower shoulders 62, 63. Thereby, Fig. 4 shows a friction agitation or stir welding system comprising the movable backing system 1 to clamp plate-shaped workpieces followed by a welding tool 60 to weld plate-shaped workpieces W.

**Fig. 5** schematically shows a possible positioning and number of rollers 21, 31 relative to the workpieces W and the welding tool 60. In Fig. 5, as a cross section, only one workpiece W and half of the numbers of rollers 21, 31 are visible. As shown in Fig. 4, four upper rollers 21 and two lower rollers 31 are provided. The welding tool 60 is shown with the upper shoulder 62 and the lower shoulder 63.

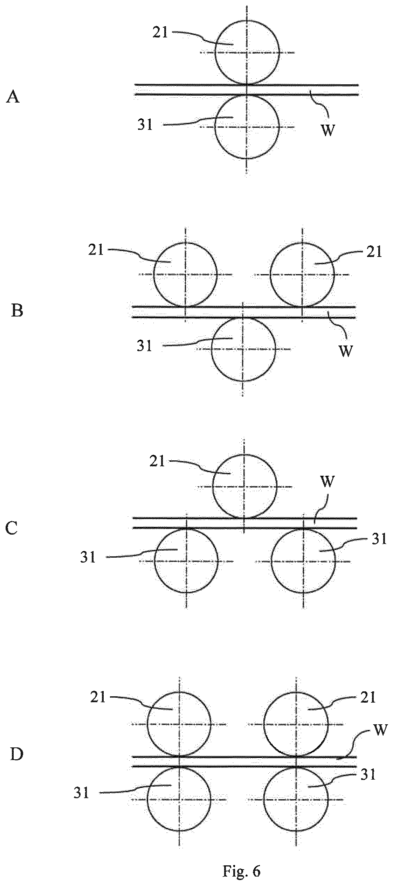

**Figs. 6A-D** also schematically show possible positionings and numbers of rollers 21, 31 relative to the workpiece W. Again, the cross sections show only half of the rollers 21, 31. Fig. 6A shows two upper rollers 21 and two lower rollers 31. Fig. 6B shows four upper rollers 21 and two lower rollers 31. Fig. 6C shows two upper rollers 21 and four lower rollers 31. Fig. 6D shows four upper rollers 21 and four lower rollers 31. There can be even more than four rollers 21, 31. Further, two lower rollers 31 can be formed by one single barrel instead of the rollers 31. Generally, adjacent rollers on both sides of the gap between the workpieces W can be combined to a barrel traversing the gap. The rollers 21, 31 can also be balls.

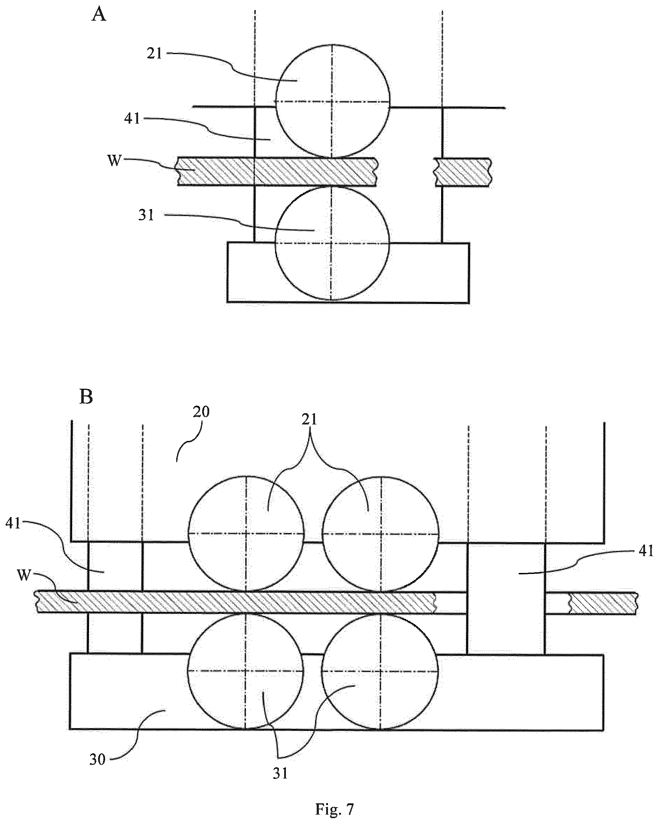

**Figs. 7A-B** schematically show possible positions of the rollers 21, 31 and the strip 41. In Fig. 7A, one strip 41 passes between two pairs of upper and lower rollers 21, 31 (only one pair is visible). In Fig. 7B, two strips 41 pass outside four pairs of upper and lower rollers 21, 31 (only two pairs visible), which means there are two upper and two lower rollers 21, 31 on each of the two workpieces W. Also a series of e.g. a strip 41 (or fiber) followed by a pair of rollers 21, 31 followed by a further strip 41 followed by a further pair of rollers 21, 31 followed by a last strip 41 is possible.

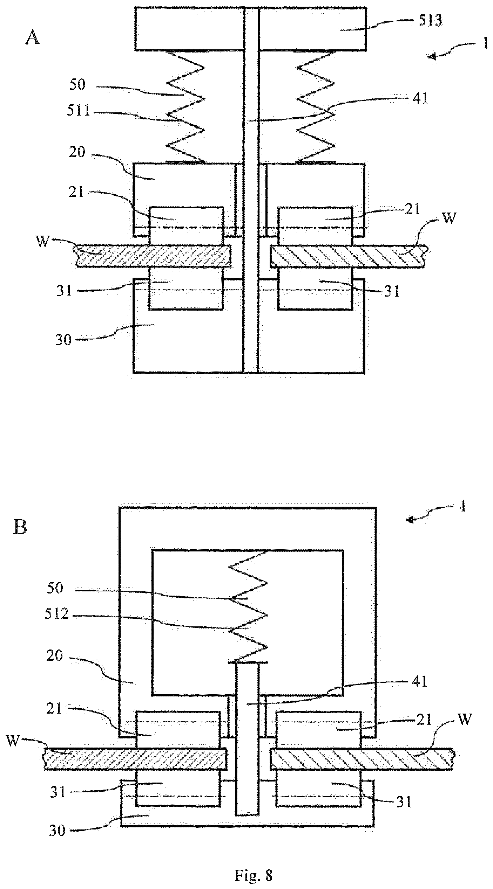

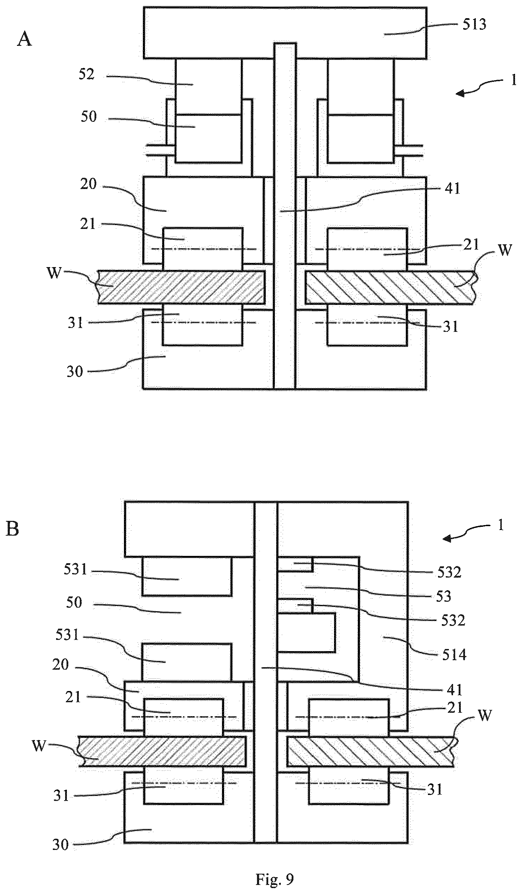

**Figs. 8A-B** **and** **9A-B** schematically show further embodiments of the movable backing system 1 with different coupling means 50. Again, each backing system 1 comprises the upper unit 20 arranged above and the lower unit 30 arranged below the two workpieces W to be welded together. The upper unit 20 comprises two upper rollers 21 and the lower unit comprises two lower rollers 31. The backing system 1 further comprises the strip 41 connecting the upper unit 20 and the lower unit 30. The backing system 1 further comprises the coupling means 50 providing a defined force between the upper and lower rollers 21, 31 to equalize thickness tolerances between the workpieces W to be welded.

In Fig. 8A, the coupling means 50 is a pressure spring 511. The pressure spring 511 either pulls the lower rollers 31 by means of a bar 513 towards the upper rollers 21 or pushes the upper rollers 21 towards the lower rollers 31. In Fig. 8B, the coupling means 50 is a tension spring 512. The tension spring 512 pulls the lower rollers 31 towards the upper rollers 21. The spring 51, 511, 512 can be a disk spring, a circular spring, a spiral spring, a leaf spring or the like.

In Fig. 9A, the coupling means 50 is a hydraulic or pneumatic pressure cylinder 52. The pressure cylinder 52 pulls the lower rollers 31 by means of a bar 513 towards the upper rollers 21 or pushes the upper rollers 21 towards the lower rollers 31. In Fig. 9B, the coupling means 50 is a magnetic system 53 with equal poles 531 and opposite poles 532. The magnetic system 53 pulls the lower rollers 31 by means of a frame 514 towards the upper rollers 21 or pushes the upper rollers 21 towards the lower rollers 31.

Above explained coupling means 50 can also be arranged in the lower unit 30 instead of in the upper unit 20.

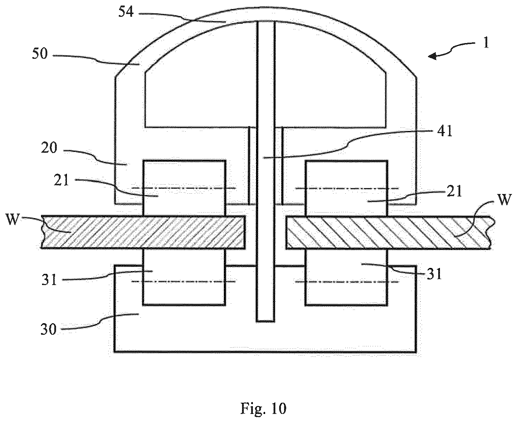

**Fig. 10** schematically shows a further embodiment of a movable backing system 1 with a further different coupling means 50. Again, each backing system 1 comprises the upper unit 20 with two upper rollers 21, the lower unit 30 with two lower rollers 31, the strip 41 connecting the upper unit 20 and the lower unit 30, and a coupling means 50 providing a defined force between the upper and lower rollers 21, 31. Here, the coupling means 50 is provided as part of a housing of the backing system 1, in particular as its cover 54. The cover 54 acts as a leaf spring. Thereby, the cover 54 and preferably also the strip 41 provides the defined force between the upper and lower rollers 21, 31.

In addition, it should be pointed out that "comprising" does not exclude other elements or steps, and "a" or "an" does not exclude a plural number. Reference characters in the claims are not to be interpreted as limitations.

## Claims

1. A friction agitation welding system to clamp plate-shaped backing workpieces (W) for friction agitation welding, comprising:
- a welding tool to weld plate-shaped backing workpieces (W),
- a movable backing system; **characterized in that** the movable backing system (1) comprises:
- an upper unit (20) to be arranged above the backing workpieces (W) to support the backing workpieces (W),
- a lower unit (30) to be arranged below the backing workpieces (W) to support the
backing workpieces (W),
- a connecting means (40) connecting the upper and the lower unit (30) to be arranged in a gap between the backing workpieces (W) to be welded.

2. The friction agitation welding system of claim 1, wherein the upper unit (20) comprises at least an upper roller (21) and the lower unit (30) comprises at least a lower roller (31) to define the position of the plate-shaped backing workpieces (W) to be welded.

3. The friction agitation welding system of claim 1, wherein the upper unit (20) comprises two or four upper rollers (21) and/or the lower unit (30) comprises two or four lower rollers (31).

4. The friction agitation welding system of claim 1, wherein the connecting means (40) is strip- or fiber-shaped.

5. The friction agitation welding system of one of the claims 2 to 4, wherein the connecting means (40) is arranged between the rollers (21, 31).

6. The friction agitation welding system of one of the claims 2 to 4, wherein the connecting means (40) is arranged outside the rollers (21, 31).

7. The friction agitation welding system of one of the preceding claims, wherein the upper and/or the lower unit (20, 30) comprises coupling means (50') to couple the upper and the lower unit (30).

8. The friction agitation welding system of one of the preceding claims, wherein the coupling means (50) is a pressure spring (511), a tension spring (512), a hydraulic and/or pneumatic cylinder (52) and/or a magnetic system (53).

9. The friction agitation welding system of one of the preceding claims, wherein the coupling means (50) is arranged in the upper unit (20) to pull the lower rollers (31) in the direction of the upper rollers (21).

10. The friction agitation welding system of one of the preceding claims, wherein the coupling means (50) is a housing of the backing system (1) acting as a leaf spring.

11. The friction agitation welding system of one of the preceding claims, wherein the upper and/or the lower unit (20, 30) comprises a sensor to monitor the movement of the movable backing system (1).

12. The friction agitation welding system of claim 4, wherein the strip has a width or diameter between about 1 and 0,01 mm, preferably between about 0,5 and 0,09 mm, and more preferably between about 0,2 and 0,1 mm.

13. The friction agitation welding system of one of the preceding claims, wherein the connecting means (40) has a high tensile strength between about 500 and 2000 N/mm², preferably between about 1000 and 1500 N/mm², and more preferably between about 1200 and 1400 N/mm².

14. The friction agitation welding system of one of the preceding claims, wherein the connecting means (40) is made of a ceramic, stainless steel or a high alloy steel, in particular a CrNi alloy.

## Patentansprüche

1. Reibrührschweißsystem zum Spannen plattenförmiger Stützwerkstücke (W) für das Reibrührschweißen, umfassend:
- ein Schweißwerkzeug zum Schweißen von plattenförmigen Stützwerkstücken (W),
- eine verfahrbare Stützeinrichtung, **dadurch gekennzeichnet, dass** die verfahrbare Stützeinrichtung (1) umfasst:
- eine obere Einheit (20) zur Anordnung oberhalb der Stützwerkstücke (W) zum Tragen der Stützwerkstücke (W),
- eine untere Einheit (30) zur Anordnung unterhalb der Stützwerkstücke (W) zum Tragen der Stützwerkstücke (W),
- ein Verbindungsmittel (40), das die obere und die untere Einheit (30) verbindet, um in einem Spalt zwischen den zu verschweißenden Stützwerkstücken (W) angeordnet zu werden.

2. Reibrührschweißsystem nach Anspruch 1, wobei die obere Einheit (20) mindestens eine obere Walze (21) umfasst und die untere Einheit (30) mindestens eine untere Walze (31) umfasst, um die Position der zu verschweißenden plattenförmigen Stützwerkstücke (W) zu definieren.

3. Reibrührschweißsystem nach Anspruch 1, wobei die obere Einheit (20) zwei oder vier obere Walzen (21) umfasst und/oder die untere Einheit (30) zwei oder vier untere Walzen (31) umfasst.

4. Reibrührschweißsystem nach Anspruch 1, wobei das Verbindungsmittel (40) streifen- oder faserförmig ist.

5. Reibrührschweißsystem nach einem der Ansprüche 2 bis 4, wobei das Verbindungsmittel (40) zwischen den Walzen (21, 31) angeordnet ist.

6. Reibrührschweißsystem nach einem der Ansprüche 2 bis 4, wobei das Verbindungsmittel (40) außerhalb der Walzen (21, 31) angeordnet ist.

7. Reibrührschweißsystem nach einem der vorstehenden Ansprüche, wobei die obere und/oder die untere Einheit (20, 30) Kopplungsmittel (50') zum Koppeln der oberen und der unteren Einheit (30) umfassen.

8. Reibrührschweißsystem nach einem der vorstehenden Ansprüche, wobei die Kopplungsmittel (50) eine Druckfeder (511), eine Zugfeder (512), ein hydraulischer und/oder pneumatischer Zylinder (52) und/oder ein Magnetsystem (53) sind.

9. Reibrührschweißsystem nach einem der vorstehenden Ansprüche, wobei die Kopplungsmittel (50) in der oberen Einheit (20) angeordnet sind, um die unteren Walzen (31) in Richtung der oberen Walzen (21) zu ziehen.

10. Reibrührschweißsystem nach einem der vorstehenden Ansprüche, wobei die Kopplungsmittel (50) ein als Blattfeder wirkendes Gehäuse der Stützeinrichtung (1) sind.

11. Reibrührschweißsystem nach einem der vorstehenden Ansprüche, wobei die obere und/oder die untere Einheit (20, 30) einen Sensor zum Überwachen der Bewegung der verfahrbaren Stützeinrichtung (1) umfassen.

12. Reibrührschweißsystem nach Anspruch 4, wobei der Streifen eine Breite oder einen Durchmesser zwischen etwa 1 und 0,01 mm, vorzugsweise zwischen etwa 0,5 und 0,09 mm und stärker bevorzugt zwischen etwa 0,2 und 0,1 mm aufweist.

13. Reibrührschweißsystem nach einem der vorstehenden Ansprüche, wobei das Verbindungsmittel (40) eine hohe Zugfestigkeit zwischen etwa 500 und 2000 N/mm², vorzugsweise zwischen etwa 1000 und 1500 N/mm² und stärker bevorzugt zwischen etwa 1200 und 1400 N/mm² aufweist.

14. Reibrührschweißsystem nach einem der vorstehenden Ansprüche, wobei das Verbindungsmittel (40) aus einem Keramikmaterial, Edelstahl oder einem hochlegierten Stahl, insbesondere einer CrNi-Legierung, hergestellt ist.

## Revendications

1. Système de soudage par friction-agitation pour fixer des pièces d'appui en forme de plaques (W) pour soudage par friction-agitation, comprenant :
- un outil de soudage pour souder des pièces d'appui en forme de plaques (W),
- un système d'appui mobile ; **caractérisé en ce que** le système d'appui mobile (1) comprend :
- une unité supérieure (20) destinée à être disposée au-dessus des pièces d'appui (W) pour supporter les pièces d'appui (W),
- une unité inférieure (30) destinée à être disposée au-dessous des pièces d'appui (W) pour supporter les pièces d'appui (W),
- un moyen de raccordement (40) raccordant l'unité supérieure et l'unité inférieure (30) destiné à être disposé dans un espace entre les pièces d'appui (W) devant être soudées.

2. Système de soudage par friction-agitation de la revendication 1, dans lequel l'unité supérieure (20) comprend au moins un rouleau supérieur (21) et l'unité inférieure (30) comprend au moins un rouleau inférieur (31) pour définir la position des pièces d'appui en forme de plaques (W) devant être soudées.

3. Système de soudage par friction-agitation de la revendication 1, dans lequel l'unité supérieure (20) comprend deux ou quatre rouleaux supérieurs (21) et/ou l'unité inférieure (30) comprend deux ou quatre rouleaux inférieurs (31).

4. Système de soudage par friction-agitation de la revendication 1, dans lequel le moyen de raccordement (40) est en forme de bande ou de fibre.

5. Système de soudage par friction-agitation d'une des revendications 2 à 4, dans lequel le moyen de raccordement (40) est disposé entre les rouleaux (21, 31).

6. Système de soudage par friction-agitation d'une des revendications 2 à 4, dans lequel le moyen de raccordement (40) est disposé à l'extérieur des rouleaux (21, 31).

7. Système de soudage par friction-agitation d'une des revendications précédentes, dans lequel l'unité supérieure et/ou inférieure (20, 30) comprend un moyen de couplage (50') pour coupler l'unité supérieure et inférieure (30).

8. Système de soudage par friction-agitation d'une des revendications précédentes, dans lequel le moyen de couplage (50) est un ressort de pression (511), un ressort de tension (512), un cylindre hydraulique et/ou pneumatique (52) et/ou un système magnétique (53).

9. Système de soudage par friction-agitation d'une des revendications précédentes, dans lequel le moyen de couplage (50) est disposé dans l'unité supérieure (20) pour tirer les rouleaux inférieurs (31) dans la direction des rouleaux supérieurs (21).

10. Système de soudage par friction-agitation d'une des revendications précédentes, dans lequel le moyen de couplage (50) est un boîtier du système d'appui (1) agissant comme un ressort à lames.

11. Système de soudage par friction-agitation d'une des revendications précédentes, dans lequel l'unité supérieure et/ou inférieure (20, 30) comprend un capteur pour suivre le mouvement du système d'appui mobile (1).

12. Système de soudage par friction-agitation de la revendication 4, dans lequel la bande a une largeur ou un diamètre compris entre environ 1 et 0,01 mm, de préférence entre environ 0,5 et 0,09 mm, et mieux encore entre environ 0,2 et 0,1 mm.

13. Système de soudage par friction-agitation d'une des revendications précédentes, dans lequel le moyen de raccordement (40) a une résistance à la traction élevée, comprise entre environ 500 et 2000 N/mm², de préférence entre environ 1000 et 1500 N/mm², et mieux encore entre environ 1200 et 1400 N/mm².

14. Système de soudage par friction-agitation d'une des revendications précédentes, dans lequel le moyen de raccordement (40) est constitué d'une céramique, d'acier inoxydable ou d'un acier fortement allié, en particulier d'un alliage CrNi.
